# EUROPÄISCHE PATENTSCHRIFT

(11) **EP 2 915 613 B1**
(45) Veröffentlichungstag und Bekanntmachung des Hinweises auf die Patenterteilung: **06.01.2021**
(21) Anmeldenummer: 15157076.9
(22) Anmeldetag: 02.03.2015
(51) Int. Cl.: B23B 51/10

(54) **Querlochsenker**
Cross hole countersink
Foret à trou transversal

(30) Priorität: 05.03.2014 DE 102014102935
(43) Veröffentlichungstag der Anmeldung: 09.09.2015
(73) Patentinhaber: Wolfcraft GmbH, 56746 Kempenich (DE)
(72) Erfinder: Ebert, Winfried, 56745 Weibern (DE); Hühmann, Franz-Josef, 56729 Langenfeld (DE); Ring, Peter, 56745 Bell (DE); Keuler, Klaus, 56651 Niederzissen (DE)
(74) Vertreter: Grundmann, Dirk

(56) Entgegenhaltungen:
- US-A- 2 829 543

## Beschreibung

Die Erfindung betrifft einen Querlochsenker mit einem um eine Drehachse antreibbaren Schaft und mit einem kegelförmigen Arbeitsabschnitt, welcher eine vom Rand einer Öffnung eines Spanabfuhrkanals ausgebildete Schneide aufweist.

Die US 2,829,543 offenbart einen Querlochsenker nach dem Oberbegriff des Anspruchs 1 bei dem zusätzlich zu der vom Rand der Öffnung des Spanabfuhrkanals ausgebildeten Schneide eine erste Ergänzungsschneide vorgesehen ist, die sich von der gekrümmten Schneide bis zur Spitze des kegelförmigen Arbeitsabschnitts erstreckt und von einer Nut ausgebildet ist.

Ein beim Betrieb rotierender Senker zum Aufweiten und/oder Entgraten des Randes einer in ein Werkstück eingebrachten Werkstückbohrung mit einer kegeligen Endpartie, an deren Mantelfläche eine in Umfangsrichtung wirkende Schneide angeordnet ist, und einem dem Senker winklig zur Rotationsachse durchziehenden Spanabfuhrkanal, der einerseits unter Bildung der Schneide mit einer Spaneintrittsöffnung an der Mantelfläche der kegeligen Endpartie und andererseits mit einer Spanaustrittsöffnung an einer in Richtung der Rotationsachse hinter der kegeligen Endpartie angeordneten Senkerpartie mündet, zeigt die DE 201 20 864 U1.

Derartige Querlochsenker erfordern eine bereits bestehende Bohrung und können den Rand einer Bohrung auch nur soweit aufweiten, wie die vom Rand der Öffnung gebildete Schneide in Wirkung bringbar ist.

Der Erfindung liegt daher die Aufgabe zugrunde, das Anwendungsspektrum eines Querlochsenkers zu vergrößern.

Gelöst wird die Aufgabe durch die in dem unabhängigen Anspruch 1 angegebene Erfindung. Vorteilhafte Weiterentwicklungen der Erfindung sind in den abhängigen Ansprüchen definiert.

Der zylinderförmige oder kegelstumpfförmige Abschnitt kann eine Übergangszone ausbilden, die direkt in den Schaft oder in einen weiteren kegelförmigen oder zylindrischen Abschnitt übergeht. Die Spaneintrittsöffnung kann einen bevorzugt kreisrunden oder ovalen Querschnitt aufweisen. Der Spanabfuhrkanal erstreckt sich winklig zur Rotationsachse und bildet eine Spanaustrittsöffnung aus, die in Richtung der Rotationsachse hinter dem kegelförmigen Arbeitsabschnitt angeordnet ist. Die Stufenausnehmung kann in den kegelförmigen Arbeitsabschnitt eingefräst werden. Dabei bilden sich vorzugsweise ebene Flächen aus. Die ebenen Flächen stehen in einem Winkel zueinander. Die die Ergänzungsschneide ausbildende Kante wird einerseits von der kegelförmigen Fläche des Arbeitsabschnittes und andererseits von einer durch die Rotationsachse gehenden Ebene ausgebildet. Die die Ergänzungsschneiden ausbildenden Flächen sind bevorzugt hinterschnitten, sodass sich ein positiver Spanwinkel einstellt. Der der kreisförmigen Schneidkante gegenüberliegende Abschnitt des Öffnungsrandes der Spaneintrittsöffnung kann teilweise aber auch vollständig in der von der Stufenausnehmung ausgebildeten Planfläche liegen. Die bis zur Randkante des kegelförmigen Arbeitsabschnitts reichende Ergänzungsschneide kann sich in eine weitere Schneide fortsetzen, die sich entlang eines weiteren kegelstumpfförmigen Abschnittes erstreckt, wobei die Spitze dieses kegelstumpfförmigen Abschnitts hin zum Schaft gerichtet ist. Diese weitere Ergänzungsschneide kann von ein oder mehreren weiteren Stufenausnehmungen ausgebildet sein. Diese Stufenausnehmungen können unter Ausbildung von Kanten aneinanderstoßen. Die Stufenausnehmungen können aber auch gewölbte Basisflächen aufweisen.

Ausführungsbeispiele der Erfindung werden nachfolgend anhand beigefügter Zeichnungen erläutert. Es zeigen:
- Figur 1:: Einen 8 mm Querlochsenker in einer perspektivischen Darstellung,
- Figur 2:: das erste Ausführungsbeispiel in einer ersten Seitenansicht,
- Figur 3:: das erste Ausführungsbeispiel in einer um 90 Grad gewendeten Seitenansicht,
- Figur 4:: die Draufsicht auf das erste Ausführungsbeispiel,
- Figur 5:: den Schnitt gemäß der Linie V - V in Figur 2,
- Figur 6:: eine Darstellung gemäß Figur 1 eines zweiten Ausführungsbeispiels, nämlich eines 20 mm Querlochsenkers,
- Figur 7:: eine Darstellung gemäß Figur 2 des zweiten Ausführungsbeispiels,
- Figur 8:: eine Darstellung gemäß Figur 3 des zweiten Ausführungsbeispiels,
- Figur 9:: eine Darstellung gemäß Figur 4 des zweiten Ausführungsbeispiels,
- Figur 10:: ein drittes Ausführungsbeispiel der Erfindung, in Form eines 12 mm Querlochsenkers,
- Figur 11:: eine Darstellung gemäß Figur 3 des dritten Ausführungsbeispiels und
- Figur 12:: eine Darstellung gemäß Figur 3 eines vierten Ausführungsbeispiels in Form eines 10 mm Querlochsenkers.

Der Querlochsenker, wie er in den Zeichnungen in Form von Ausführungsbeispielen mit verschiedenen Nennweiten dargestellt ist, besteht aus Stahl. Es kann sich um ein einstückiges Schmiedeteil handeln. Das Werkzeug besitzt einen um eine Rotationsachse A drehantreibbaren Schaft 1. Dem Schaft 1 liegt ein kegelförmiger Arbeitsabschnitt 2 gegenüber, der eine Spitze 10 ausbildet, die in der Rotationsachse A liegt. An den kegelförmigen Arbeitsabschnitt 2 schließt sich ein leicht kegelförmiger Abschnitt 11 an. An den Abschnitt 11 schließt sich eine zylindrische oder kegelstumpfförmige Übergangsfläche 17 eines Übergangsbereichs an, an die sich wiederum der Schaft 1 anschließt. Der Schaft 1 kann rund ausgebildet sein. Im Ausführungsbeispiel ist er als Mehrkant-, insbesondere Sechskantprofil ausgebildet.

Der den kegelförmigen Arbeitsabschnitt 2 aufweisende Kopf des Querlochsenkers besitzt einen Spanabfuhrkanal 3. Der Spanabfuhrkanal 3 hat einen kreisrunden Querschnitt und schneidet die Rotationsachse A in einem Winkel, der in etwa dem Öffnungswinkel des kegelförmigen Arbeitsabschnitts 2 entspricht. Die Mittelachse des Spanabfuhrkanals 3 kann dabei die Rotationsachse A schneiden.

Eine Spaneintrittsöffnung 4 des Spanabfuhrkanals 3 liegt im kegelförmigen Arbeitsabschnitt 2. Die Spanaustrittsöffnung 5 des Spanabfuhrkanals 3 liegt in Richtung auf den Schaft 1 versetzt zur zum kegelförmigen Arbeitsabschnitt 2, im Ausführungsbeispiel im Bereich der Übergangszone, also im leicht kegelförmigen Abschnitt 11 bzw. im Abschnitt 17. Der Durchmesser der Spanaustrittsöffnung 5 kann größer sein, als der Durchmesser der Spaneintrittsöffnung 4. Der Spanabfuhrkanal 3 kann zwei hintereinander angeordnete Zylinderbohrungen mit voneinander verschiedenen Durchmessern aufweisen. Es bildet sich dadurch eine Stufe 20 aus.

Mit einer durch Schleifen oder Fräsen oder einem anderem spanabtragenden Bearbeitungsverfahren erzeugten Stufenausnehmung 7 ist eine zwei Abschnitte bzw. Einzelschneiden 8, 9 aufweisende Ergänzungsschneide erzeugt. Die Ergänzungsschneide 8, 9 verläuft entlang einer Mantellinie durch den Kegel, der den Arbeitsabschnitt 2 ausbildet. Die Stufenausnehmung 7 besitzt zwei Planflächen 7', 7". Die Planfläche 7" bildet mit der Übergangskante zum kegelförmigen Arbeitsabschnitt 2 die Ergänzungsschneide 8, 9 aus. Die Planfläche 7" liegt in einer Ebene. Sie bildet mit der kegelförmigen Fläche 2 einen positiven Spanwinkel. Die Ebene der Planfläche 7" ist somit geringfügig geneigt gegenüber einer Ebene, in der sowohl die Rotationsachse A als auch die Mittellinie des Spanabfuhrkanals 3 liegt. Die Planfläche 7' verläuft in etwa rechtwinklig dazu. Der Winkel zwischen der Planfläche 7' und 7" ist kleiner als 90 Grad, wenn die Ergänzungsschneide 8, 9 hinterschnitten ist. Die Fläche 7' geht in eine Kante 12 in die kegelförmige Fläche 2 über.

Die Ergänzungsschneide 8, 9 verläuft entlang einer Diametralen durch die Spaneintrittsöffnung 4. Ein Abschnitt der Ergänzungsschneide 8 verläuft vom Rand 6 der Spaneintrittsöffnung bis zur Spitze 10. Ein zweiter Abschnitt 9 der Ergänzungsschneide verläuft vom Rand 6 der Spaneintrittsöffnung bis zum äußeren Rand des kegelförmigen Arbeitsabschnittes. Die Planfläche 7" erstreckt sich somit in Axialrichtung bis über den Rand des kegelförmigen Arbeitsabschnittes 2 hinaus in den zylinderförmigen Abschnitt 11. Der Rand 6, der die kreisbogenförmige Schneide ausbildet, geht insbesondere unter Ausbildung eines rechten Winkels jeweils in eine der beiden Ergänzungsschneidenabschnitt 8, 9 über.

Der in der Kegelfläche 2 liegende Abschnitt des Öffnungsrandes der Spaneintrittsöffnung 4 bildet eine halbkreisförmige Schneide 6 aus, die in die gradlinig verlaufenden Abschnitte der Ergänzungsschneide 8, 9 übergeht.

Der nicht die kreisbogenförmige Schneide 6 ausbildende Abschnitt der Öffnung 4, nämlich die Öffnungsrandkante 6' verläuft größtenteils in der Planfläche 7". Der Bereich dieser Öffnungsrandkante 6' kann aber auch im kegelförmigen Arbeitsabschnitt 2 verlaufen. Dies ist insbesondere beim Querlochsenker des dritten Ausführungsbeispiels der Fall, bei dem die Randkante 16 Des kegelförmigen Arbeitsabschnittes 2 einen Durchmesser von 20 mm besitzt. Bei den anderen Ausführungsbeispielen, bei denen der Durchmesser der Randkante 16 einen Durchmesser von 8, 10 oder 12 mm aufweist, liegt der Randabschnitt 6' vollständig in der Planfläche 7'.

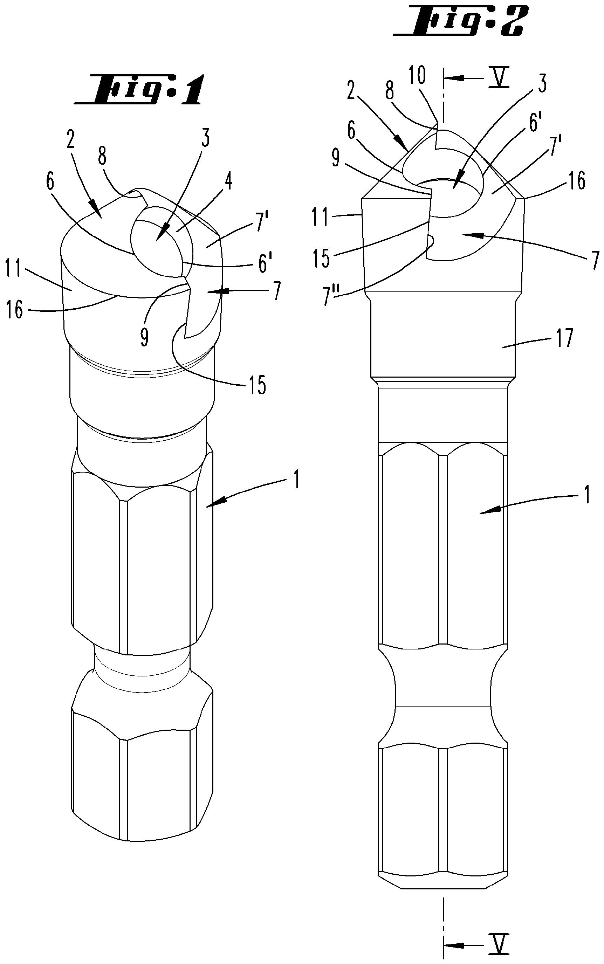

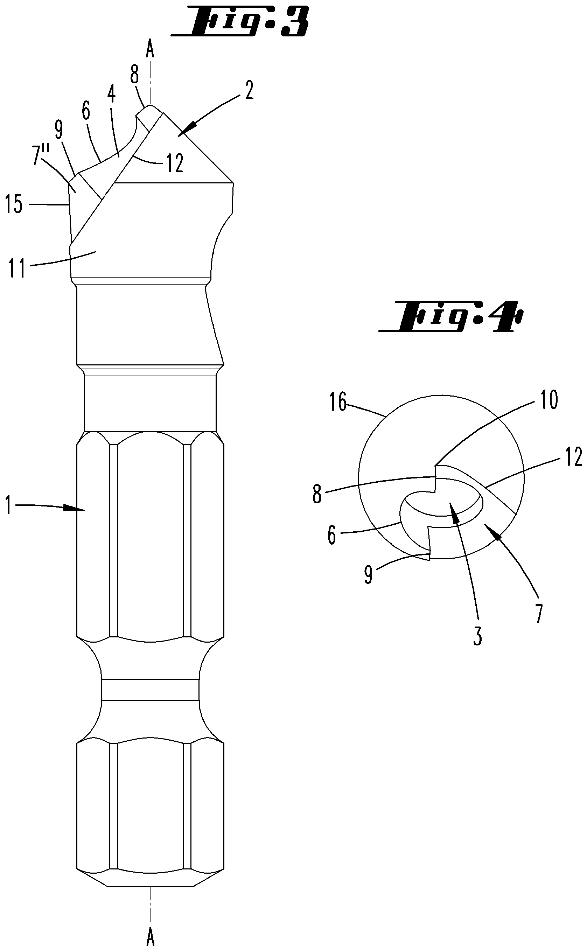

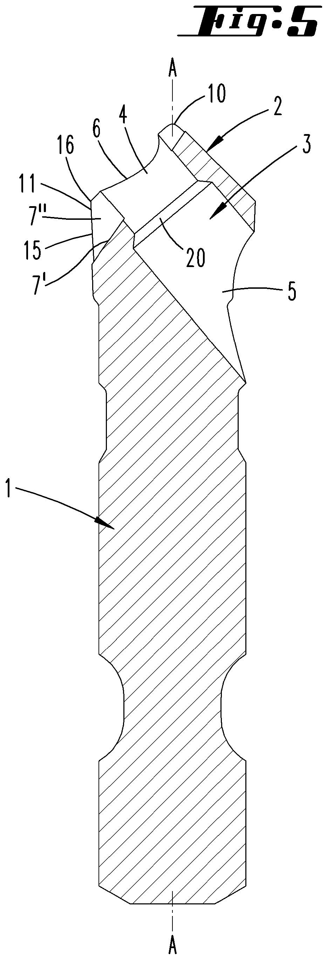

An die Randkante 16 schließt sich unmittelbar an die dort endende Ergänzungsschneide 9 eine weitere Ergänzungsschneide 15 an, die sich über den leicht kegelstumpfförmig verlaufenden Abschnitt 11 erstreckt. Diese Schneide 15 wird auch von der Planfläche 7" gebildet. Bei dem in den Figuren 1 bis 5 dargestellten ersten Ausführungsbeispiel erstreckt sich die Stufenausnehmung 7 unter Ausbildung zweier Planflächen 7', 7" bis in den kegelstumpfförmigen Anschlussabschnitt 11 hinein.

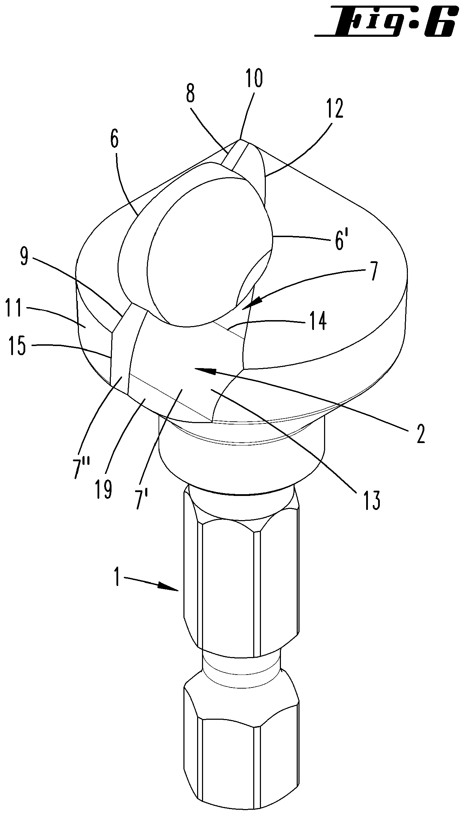

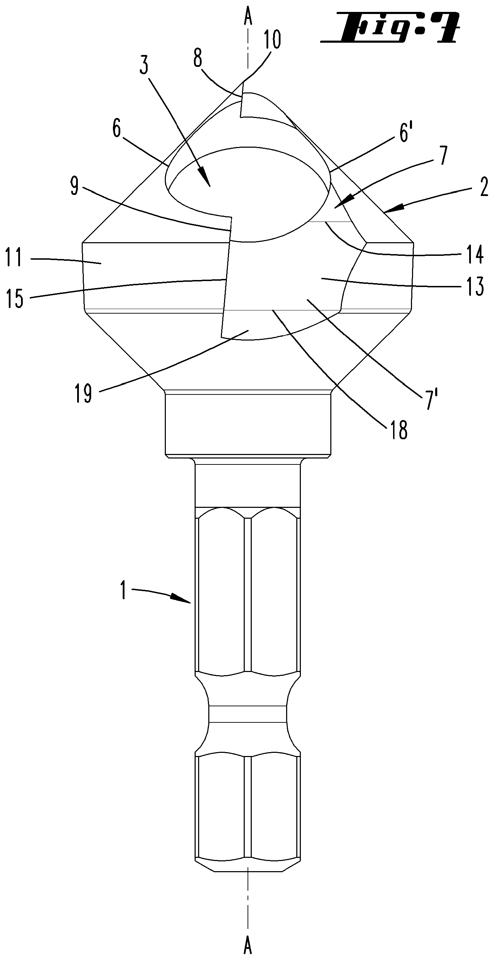

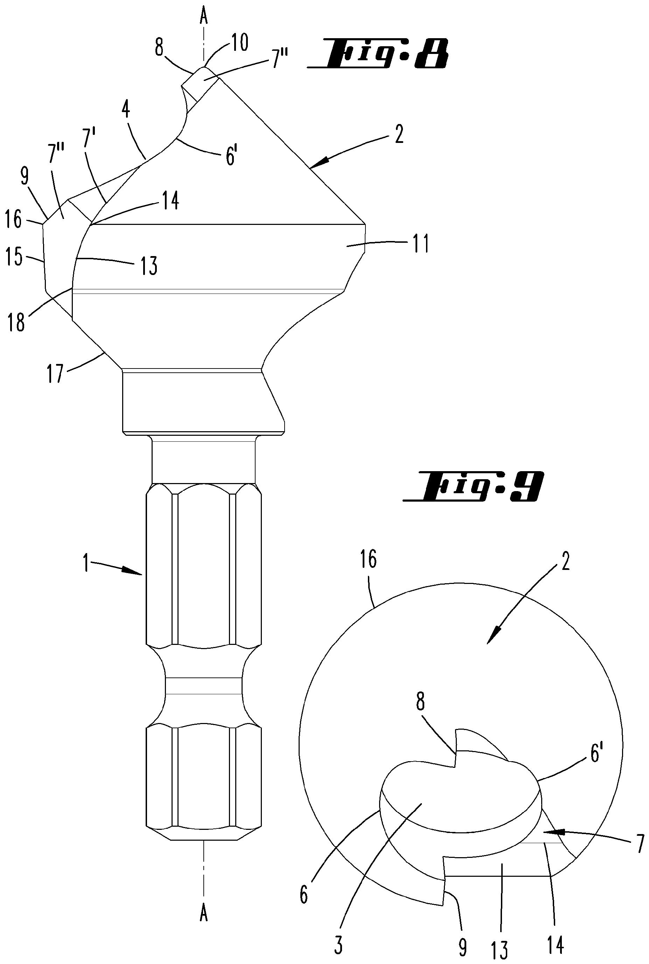

Bei dem in den Figuren 6 bis 9 dargestellten zweiten Ausführungsbeispiel geht die Planfläche 7' in der Linie 14 in eine leicht gewölbte freigeschnittene Fläche 13 über, die wiederum unter Ausbildung einer Kante 18 in den kegelstumpfförmigen Abschnitt 17 ausläuft. Es bildet sich somit eine freigeschnittene Spanflanke 7" aus, die die Ergänzungsschneide 9, 15 ausbildet, wobei die Ergänzungsschneide 9 in Achsrichtung vor der Randkante 16 und die Ergänzungsschneide 15 in Achsrichtung hinter der Randkante 16 liegt.

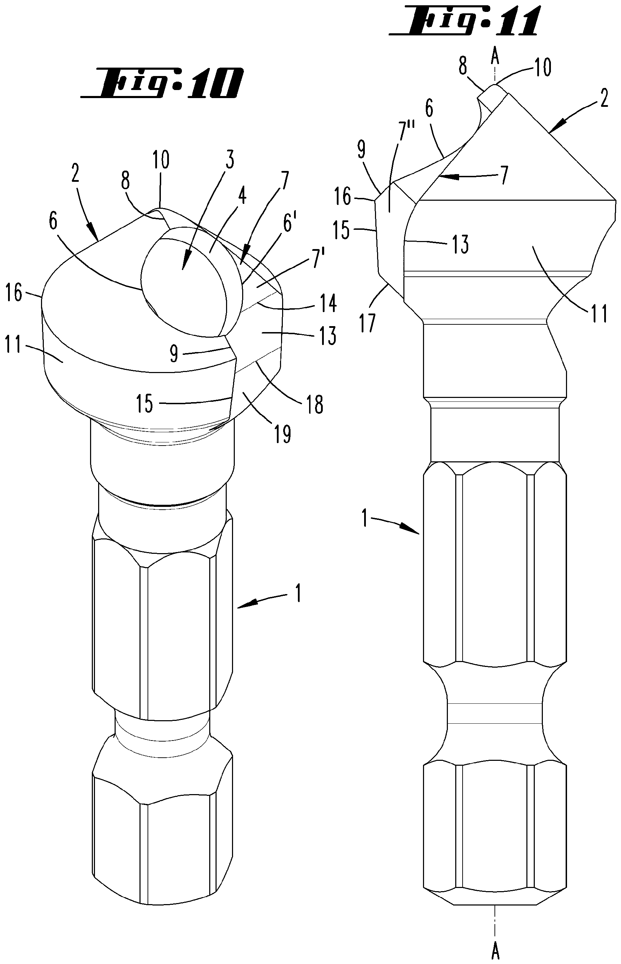

Bei dem in den Figuren 10 und 11 dargestellten dritten Ausführungsbeispiel erstreckt sich die Stufenausnehmung ebenfalls bis in den kegelstumpfförmigen Bereich 17, also über die leicht kegelstumpfförmig verlaufende Zone 11 hinaus, sodass sich eine Ergänzungsschneide 15 ausbildet, die in Achsrichtung rückwärtig der Randkante 16 verläuft.

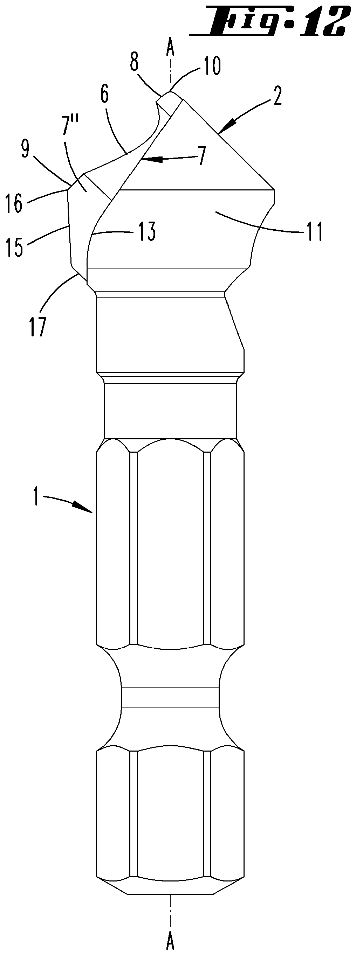

Bei dem in der Figur 12 dargestellten vierten Ausführungsbeispiel erstreckt sich die Stufenausnehmung 7 ebenfalls unter Ausbildung eines gewölbten Flächenabschnittes 13 bis in den kegelstumpfförmigen Abschnitt 17.

Mit dem erfindungsgemäßen Querlochsenker können kegelförmige Vertiefungen in das Vollmaterial gebohrt werden, da sich die Ergänzungsschneide 8 bis zur Spitze 10 erstreckt. Mit dem erfindungsgemäßen Querlochbohrer lässt sich darüber hinaus eine Bohrung mit einem zylinderförmigen Rand erzeugen, da sich die Ergänzungsschneide 9 bis zum radial äußersten Rand des kegelförmigen Arbeitsabschnitts 2 erstreckt.

### Bezugszeichenliste:

- 1: Schaft
- 2: Arbeitsabschnitt
- 3: Spanabfuhrkanal
- 4: Spaneintrittsöffnung
- 5: Spanaustrittsöffnung
- 6: Schneide
- 6': Öffnungsrandkante
- 7: Stufenausnehmung
- 7': Planfläche
- 7": Planfläche
- 8: Ergänzungsschneide
- 9: Ergänzungsschneide
- 10: Spitze
- 11: Abschnitt
- 12: Randkante
- 13: Stufenausnehmung
- 14: Linie
- 15: Ergänzungsschneide
- 16: Randkante
- 17: Übergangsfläche
- 18: Kante
- 19: Fläche
- 20: Stufe

- A: Rotationsachse

## Patentansprüche

1. Querlochsenker mit einem um eine Drehachse (A) antreibbaren Schaft (1), mit einem kegelförmigen Arbeitsabschnitt (2), welcher eine vom Rand einer Öffnung (4) eines Spanabfuhrkanals (3) ausgebildete Schneide (6) und eine im kegelförmigen Abschnitt (2) angeordnete, von der Kante einer Stufenausnehmung (7) gebildete, entlang einer Mantellinie verlaufende und sich bis zur Spitze des kegelförmigen Abschnitts (2) erstreckende erste Ergänzungsschneide (8) aufweist, und mit einem sich in Axialrichtung daran anschließenden zylindrischen oder leicht kegelstumpfförmigen Abschnitt (11), **dadurch gekennzeichnet, dass** sich eine zweite Ergänzungsschneide (9) entlang der Mantellinie bis in den zylindrischen oder leicht kegelstumpfförmigen Abschnitt (11) erstreckt.

2. Querlochsenker nach Anspruch 1, **dadurch gekennzeichnet, dass** die Mantellinie durch die Mitte der insbesondere kreisförmigen Öffnung (4) verläuft.

3. Querlochsenker nach einem der vorhergehenden Ansprüche, **dadurch gekennzeichnet, dass** die erste und die zweite Ergänzungsschneide (8, 9) bildende Stufenausnehmung (7) spitzwinklig aufeinander stehende Flächen (7, 7") ausbildet.

4. Querlochsenker nach Anspruch 3, **dadurch gekennzeichnet, dass** die Stufenausnehmung (7) von zwei Planflächen (7', 7") gebildet ist.

5. Querlochsenker nach einem der vorhergehenden Ansprüche, **gekennzeichnet durch** eine dritte Ergänzungsschneide (15), die sich an die zweite Ergänzungsschneide (9) anschließt und im Bereich des leicht kegelförmigen Abschnitts (11) angeordnet ist, der sich jenseits der Randkante (16) des kegelförmigen Abschnitts (2) erstreckt.

6. Querlochsenker nach einem der vorhergehenden Ansprüche, **dadurch gekennzeichnet, dass** ein kreisbogenförmiger Öffnungsrandabschnitt (6') der Spaneintrittsöffnung (4), der der kreisbogenförmigen Schneide (6) gegenüber liegt, in einer freigeschnittenen Fläche (7, 13) der Stufenausnehmung (7) verläuft.

## Claims

1. Cross hole countersink comprising a shaft (1) which can be driven about an axis of rotation (A), comprising a conical work portion (2) which has a cutting edge (6) formed by the rim of an opening (4) in a chip removal channel (3) and has a first supplementary cutting edge (8) which is arranged in the conical portion (2), formed by the edge of a stepped recess (7), runs along a surface line and extends to the tip of the conical portion (2), and comprising a cylindrical or slightly frustoconical portion (11) adjoining said conical portion in the axial direction, **characterised in that** a second supplementary cutting edge (9) extends along the surface line into the cylindrical or slightly frustoconical portion (11).

2. Cross hole countersink according to claim 1, **characterised in that** the surface line runs through the centre of the in particular circular opening (4).

3. Cross hole countersink according to either of the preceding claims, **characterised in that** the stepped recess (7) forming the first and the second supplementary cutting edge (8, 9) forms surfaces (7, 7") at an acute angle to one another.

4. Cross hole countersink according to claim 3, **characterised in that** the stepped recess (7) is formed by two planar surfaces (7', 7").

5. Cross hole countersink according to any of the preceding claims, **characterised by** a third supplementary cutting edge (15) which adjoins the second supplementary cutting edge (9) and is arranged in the region of the slightly conical portion (11) that extends beyond the rim edge (16) of the conical portion (2).

6. Cross hole countersink according to any of the preceding claims, **characterised in that** an arcuate opening rim portion (6') of the chip inlet opening (4), which lies opposite the arcuate cutting edge (6), runs in a cut-free surface (7, 13) of the stepped recess (7).

## Revendications

1. Fraise à trou transversal avec un arbre (1) pouvant être entraîné autour d'un axe de rotation (A), avec une partie de travail conique (2) qui présente une arête de coupe (6) formée par le bord d'une ouverture (4) d'un canal d'évacuation de copeaux (3) et une première arête de coupe complémentaire (8) agencée dans la partie conique (2), qui est formée par le bord d'un évidement étagé (7), qui court le long d'une génératrice et qui s'étend jusqu'à la pointe de la partie conique (2), et à laquelle se raccorde, dans la direction axiale, une partie cylindrique ou légèrement conique (11), **caractérisée en ce qu'**une deuxième arête de coupe complémentaire (9) s'étend le long de la génératrice jusque dans la partie cylindrique ou légèrement tronconique (11).

2. Fraise à trou transversal selon la revendication 1, **caractérisée en ce que** la génératrice s'étend à travers le centre de l'ouverture (4) qui, en particulier, est de forme circulaire.

3. Fraise à trou transversal selon l'une des revendications précédentes, **caractérisée en ce que** l'évidement étagé (7) formant les premier et deuxième arrêtes de coupe complémentaires (8, 9), forment des surfaces (7, 7") disposées de manière à former un angle aigu entre elles.

4. Fraise à trou transversal selon la revendication 3, **caractérisée en ce que** l'évidement étagé (7) est formé par deux surfaces planes (7', 7").

5. Fraise à trou transversal selon l'une des revendications précédentes, **caractérisée par** une troisième arête de coupe complémentaire (15) qui se raccorde à la deuxième arête de coupe complémentaire (9) et qui est agencée dans la région de la partie légèrement conique (11) qui s'étend au-delà du bord (16) de la partie conique (2).

6. Fraise à trou transversal, selon l'une des revendications précédentes, **caractérisée en ce qu'**une partie de bord d'ouverture (6') en forme d'arc de cercle de l'ouverture d'entrée des copeaux (4), qui est opposée au bord de coupe (6) en forme d'arc de cercle, s'étend dans une surface de coupe (7, 13) de l'évidement étagé (7).
